# EUROPEAN PATENT SPECIFICATION

(11) **EP 2 554 523 B1**
(45) Date of publication and mention of the grant of the patent: **11.01.2017**
(21) Application number: 12178447.4
(22) Date of filing: 30.07.2012
(51) Int. Cl.: C03B 37/018, C03B 37/012, C03C 13/04, G02B 6/036, C03B 37/014

(54) **METHOD FOR MAKING AN OPTICAL FIBER PREFORM**
VERFAHREN ZUR HERSTELLUNG EINER VORFORM FÜR OPTISCHE FASERN
PROCÉDÉ DE FABRICATION D'UNE PRÉFORME POUR FIBRE OPTIQUE

(30) Priority: 01.08.2011 JP 2011168706
(43) Date of publication of application: 06.02.2013
(73) Proprietor: Sumitomo Electric Industries, Ltd., Osaka-shi, Osaka 541 (JP)
(72) Inventor: Haruna, Tetsuya, Kanagawa (JP); Hirano, Masaaki, Kanagawa (JP); Tamura, Yoshiaki, Kanagawa (JP)
(74) Representative: Hoffmann Eitle

(56) References cited:
- EP-A2- 2 511 741
- WO-A2-2004/020357
- US-A1- 2005 063 663
- US-A1- 2008 050 086

## Description

### BACKGROUND OF THE INVENTION

### Field of the Invention

The present invention relates to a method of manufacturing an optical fiber preform.

### Description of the Background Art

An optical fiber made of silica glass in which an alkali metal is added to the core region is known (WO 2004/020357, WO 2005/021455, WO 2006/112918, WO 2008/024255, WO 2007/149344, WO 2008/136929, WO 98/002389, US 2006/0130530 A1 and US 5,146,534). In the case where an alkali metal is added to the core region of an optical fiber preform, the viscosity of the core region can be lowered when the optical fiber preform is drawn into a fiber, whereby the relaxation of network structure in the glass of the core region will progress. Therefore, it is said that the attenuation of an optical fiber can be lessened.

A diffusion method is known as a technique for adding an alkali metal into silica glass (e.g. WO 2004/020357 and US 2006/0130530 A1). The diffusion method is a technique for conducting diffusion doping of alkali metals into the inner surface of a glass pipe such that while material vapors such as alkali metals or alkali metal salts which are used as materials are introduced into the glass pipe, the glass pipe is heated with an outside heating source or a plasma is generated in the glass pipe.

An alkali metal is added to the inner surface and neighboring portion of a glass pipe as mentioned above, and thereafter the glass pipe is subjected to diameter contraction by heating. After the diameter contraction, the inner surface of the glass pipe is etched by an appropriate thickness in order to remove transition metal elements, such as Ni, Fe, or the like, which have been inevitably added simultaneously when the alkali metal is added. Since an alkali metal exhibits quicker diffusion than the transition metal elements, it is possible to keep the alkali metal to remain even if the transition metal elements are removed by etching the glass surface at a certain thickness. Thus, a core rod to which an alkali-metal is added is prepared by heating and collapsing the glass pipe after etching. And an optical fiber preform is produced by forming a cladding part on the outside of the core rod to which the alkali-metal is added. Thus, an optical fiber can finally be manufactured by drawing the optical fiber preform into a fiber.

US 2008/0050086 A1 describes an optical fiber comprising (i) a silica-based core which comprises an alkali metal oxide in an average concentration of 50-1,000 ppm by weight, and includes a first region located along the centerline of the core which contains < 100 ppm of Cl and a second core region surrounding the first region and containing a peak chlorine concentration of > 500 ppm; and (ii) a silica-based cladding surrounding and directly adjacent the core, which cladding can be provided, among others, by sleeving with a silica glass tube, and may be fluorine-doped to achieve a relative refractive index delta% between the core and the cladding of > 0.2%.

EP-A-2 511 741, which is prior art under Article 54(3) EPC, discloses [0012] an optical fiber preform including (i) a core portion having at least a first core portion including a central axis and containing ≥ 10 atomic ppm of an alkali metal and 10-600 atomic ppm of Cl, a second core portion disposed in contact with the outer circumference of the first core portion and containing ≤ 10 atomic ppm of an alkali metal and 10-600 atomic ppm of Cl, and a third core portion disposed in contact with the outer circumference of the second core portion and containing ≤ 10 atomic ppm of an alkali metal and ≥ 2,000 atomic ppm of Cl and (ii) a cladding portion which is a silica-based glass and formed on the outside of the core portion by a rod-in-collapse method.

### SUMMARY OF THE INVENTION

The object of the present invention is to provide a method of manufacturing an optical fiber preform which is suitable for producing a low-attenuation optical fiber with high yield.

Thus, the present invention provides a method of manufacturing an optical fiber preform (10) having
(a) a core region (20) having
   - a first core region (21) which includes a central axis, has a Cl concentration of < 600 atm-ppm and has an alkali metal selectively added thereto,
   - a second core region (22) provided around the first core region (21) and having a Cl concentration of < 600 atm-ppm, and
   - a third core region (23) provided around the second core region (22) and having a Cl concentration of ≥ 3,000 atm-ppm
(b) a cladding region (30) formed around the core region and having a refractive index lower than that of the core region (20);
   the method comprises the steps of:
   (i) preparing a core rod having a first core region (21), a second core region (22) and a third core region (23) as defined above; and
   (ii) adding a cladding region around the core rod by inserting the core rod into a silica glass pipe and integrating the core rod and the silica glass pipe by heating at a temperature of ≥ 1,200°C for ≤ 7 hours.

According to the present invention, it is possible to manufacture a high yield optical fiber preform suitable for making an optical fiber that will exhibit a low attenuation.

### BRIEF DESCRIPTION OF THE DRAWINGS

Figure 1 is a sectional view of an optical fiber preform produced by the method of the present invention.
Figure 2 is a conceptional schematic diagram illustrating the step of preparing a core rod in an embodiment of the invention for the method of manufacturing an optical fiber preform.
Figures 3A and 3B are conceptional schematic diagrams illustrating the step of adding a cladding region according to a soot deposition and consolidation method.
Figure 4 is a conceptional schematic diagram illustrating the step of adding a cladding region by a rod-in-collapse method.
Figure 5 is a graph indicating crystallization (or non-crystallization) under the respective conditions at the step of adding a cladding region.
Figure 6 is a graph showing the relation between a ratio (d₂/d₁) and the attenuation of an optical fiber, where d₁ is the diameter of the first core region and d₂ is the diameter of the second core region.
Figure 7 is a conceptional schematic diagram showing the refractive index profile of an optical fiber.
Figure 8 is a conceptional schematic diagram showing other examples of refractive index profile of an optical fiber.

### DETAILED DESCRIPTION OF THE INVENTION

Hereinafter, preferred embodiments of the present invention will be described with reference to the accompanying drawings. The drawings are provided for the purpose of explaining the embodiments and are not intended to limit the scope of the invention. In the drawings, an identical mark represents the same element so that the repetition of explanation may be omitted. The dimensional ratios in the drawings are not always exact.

The inventor of the present application has found that letting an alkali metal and a Cl element to co-exist in a silica glass optical fiber is effective for lessening attenuation of the fiber. However, in the case where the alkali metal and the Cl element are both added to the core region of an optical fiber preform, air bubbles and crystals of alkali metal chloride will be generated in the silica glass. In the process of drawing the optical fiber preform into a fiber, such crystals of alkali metal chloride and air bubbles will cause breakage and fluctuation in the diameter of an optical fiber or locally degrade attenuation of an optical fiber, resulting in a factor of low yield in manufacture of optical fibers.

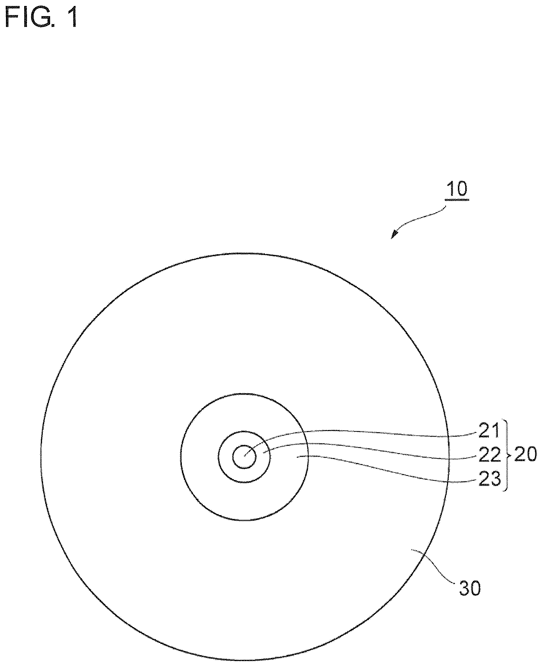

Figure 1 is a sectional view of an optical fiber preform 10 produced by the method of the present invention. The optical fiber preform 10 is made of silica glass and has a core region 20 including a central axis and a cladding region 30 provided around the core region 20. The cladding region 30 has a refractive index lower than that of the core region 20. The core region 20 has a first core region 21 including the central axis, a second core region 22 provided around the first core region 21, and a third core region 23 provided around the second core region 22.

The Cl concentrations of the first and second core regions 21 and 22 are respectively less than 600 atomic ppm. The Cl concentration of the third core region 23 is 3000 atomic ppm or more. An alkali metal is selectively added to the first core region 21 among the core regions 21, 22, and 23.

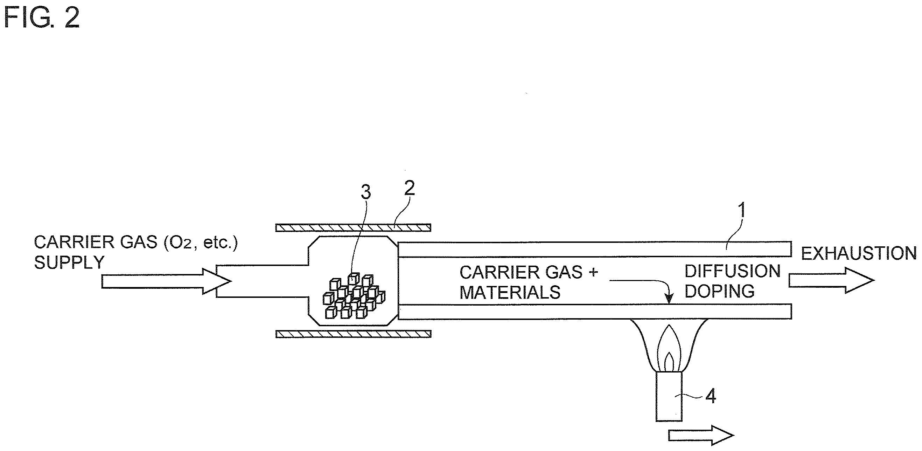

The method of this embodiment for manufacturing an optical fiber preform comprises: a step of preparing a core rod which is to become the core region 20; and a step of adding a cladding region 30 around the core rod. Figure 2 is a conceptional schematic diagram illustrating the step of preparing a core rod in an embodiment of the method of the invention. A gas of alkali metal materials 3 which has been heated by a heat source 2 (an electric furnace, a burner, or the like) is supplied together with a carrier gas (O₂ gas, Ar gas, He gas, or the like) to the inside of a silica glass pipe 1 in which the Cl concentration is less than 600 atomic ppm. At the same time, the glass pipe 1 is heated by an outside heat source 4 (thermal plasma, oxy-hydrogen flame, or the like). Thus, the glass pipe 1 is doped with the alkali metals from the inner surface thereof.

After the diameter contraction of the glass pipe 1 is carried out by heating, transition metal elements such as Ni and Fe and OH group, which have been inevitably added simultaneously at the time of alkali metal doping, are removed by etching the inside surface of the glass pipe 1. Thus, a glass rod is prepared by collapsing the glass pipe 1. In a glass rod, the central part where the alkali metal has been added becomes a first core region 21. The transition metal elements and OH group existing in the outer surface are removed by grinding the surface of the glass rod 1 by a given quantity. Consequently, the peripheral portion of the glass rod 1 becomes a second core region 22 in which the alkali metal concentration and the chlorine concentration are both low.

A core glass rod which is to become the core region 20 is prepared by forming a third core region 23 around the glass rod 1. The third core region 23 is formed by synthesizing silica-based glass to which Cl elements of high concentration of 3,000 atomic ppm or more are added ("soot deposition and consolidation method"). Or, the third core region 23 is formed by collapsing a silica-based glass pipe having Cl elements of high-concentration of 3000 atomic ppm or more ("rod-in collapse method"). An optical fiber preform 10 is fabricated by forming a cladding region 30 around the third core region 23.

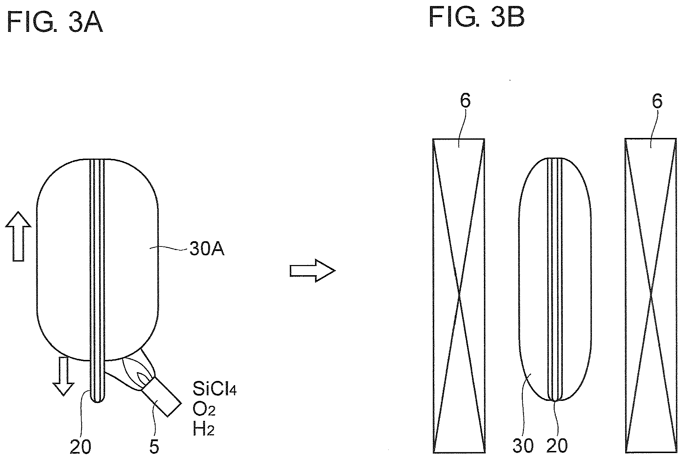

Figures 3A and 3B are conceptional schematic diagrams illustrating a soot deposition and consolidation method by reference to a step of adding a cladding region to a core region. The soot deposition and consolidation method consists of a soot deposition process (Fig. 3A) and a consolidation process (Fig. 3B). In the soot deposition process, a glass soot body 30A is formed around the core rod 20 by blowing off a material gas and the like (SiCl₄, O₂, H₂) from a burner 5 with a method such as VAD, OVD, or the like. In the consolidation process, the glass soot body 30A is vitrified by heating with a heater 6 so as to make a cladding region 30. Thus, an optical fiber preform 10 is fabricated.

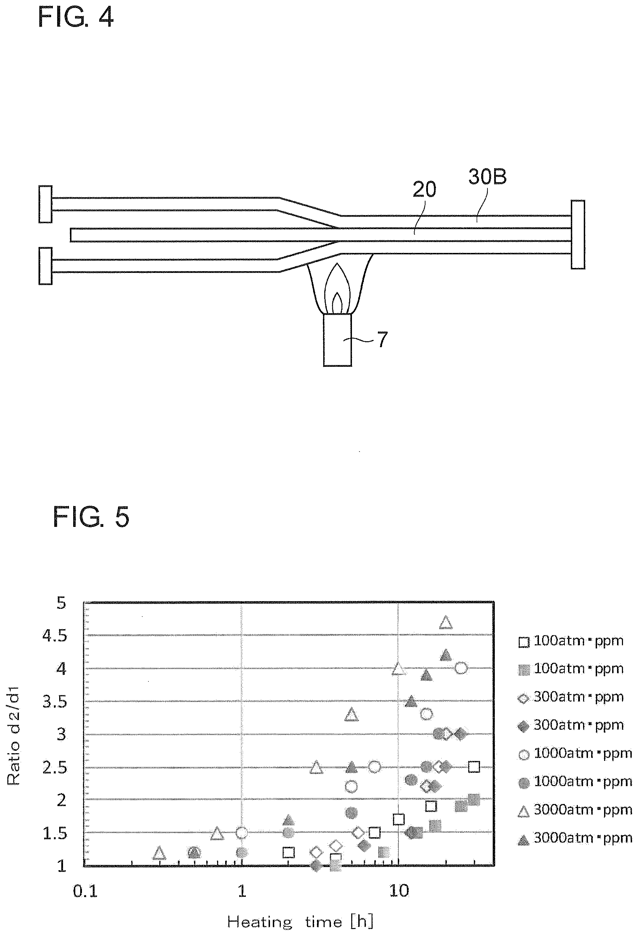

Figure 4 is a conceptional schematic diagram illustrating the step of adding a cladding region by the rod-in-collapse method. In the rod-in-collapse method, a tubular material 30B which is to become a cladding region 30 is prepared, and the core rod 20 is inserted into the tubular material 30B, and the outside of the tubular material 30B is heated with a burner 7 so as to consolidate the core rod 20 and the tubular material 30B (collapsing), whereby an optical fiber preform 10 is fabricated.

The alkali metal added to the first core region 21 tends to diffuse so fast that the diffusion will spread in a wide range if the heating time is long. At the step of adding a cladding region, particularly at the consolidation process, in the soot deposition and consolidation method, generally it is necessary to conduct the heating at least for 8 hours or more at a temperature of not less than 1,200°C. In such case, diffusion of alkali metals in the first core region 21 will progress, and consequently the alkali metals and Cl elements will react with each other at the interface between the second core region 22 having a low Cl concentration (<600 atomic ppm) and the third core region 23 having a high Cl concentration (>3,000 atomic ppm), thereby generating salts which will cause crystallization and bubbles.

Hereinafter, the results of an experiment in which potassium as alkali metal was added to the first core region 21 will be explained. In this experiment, the Cl concentration of a glass pipe 1 (namely, the respective Cl concentration of the first core region 21 and the second core region 22) was 300 atomic ppm, whereas the Cl concentration of the third core region 23 was 10,000 atomic ppm. An investigation was done as to occurrence (or non-occurrence) of crystallization at the interface between the second core region 22 and the third core region 23 in optical fiber preforms 10 produced under different conditions, by adopting various values for potassium concentration in the first core region 21, ratios (d₂/d₁) of the diameter d₂ of the second core region 22 to the diameter d₁ of the first core region 21, and heating time at temperatures of not less than 1,200°C in the step of adding a cladding region. Note that the larger the ratio (d₂/d₁), the thicker the low Cl concentration second core region 22 is. In the case where the heating time at a temperature of not less than 1,200°C was 8 hours or more, the soot deposition and consolidation method was adopted, whereas the rod-in-collapse method was adopted when the heating time was less than 8 hours.

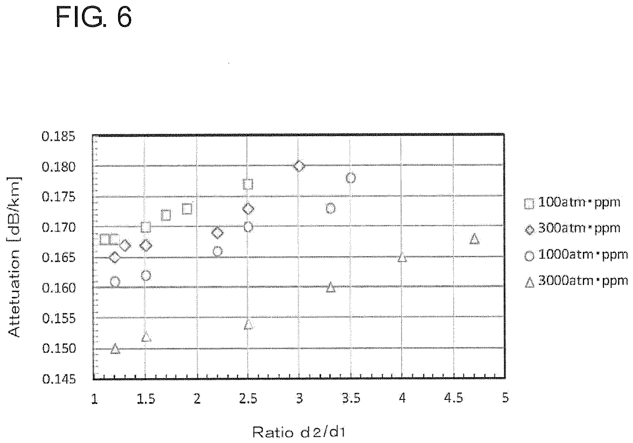

Figure 5 is a graph indicating occurrence (or non-occurrence) of crystallization under the respective conditions at the step of adding a cladding region: hollow marks are results in the case of Examples and solid marks are results in the case of Comparative Examples. There were no occurrences of crystallization in Examples, while crystallization occurred in the Comparative Examples. Tables I and II summarize the conditions at the step of adding a cladding region for the respective Examples and Comparative Examples shown in Fig. 6.

**Table I**

| | Average Concentration of Potassium (atm ppm) | Heating time (h) | Ratio d₂/d₁ |
|---|---|---|---|
| Example 1 | 100 | 4 | 1.1 |
| Example 2 | 100 | 2 | 1.2 |
| Example 3 | 100 | 7 | 1.5 |
| Example 4* | 100 | 10 | 1.7 |
| Example 5* | 100 | 16 | 1.9 |
| Example 6* | 100 | 30 | 2.5 |
| Example 7 | 300 | 3 | 1.2 |
| Example 8 | 300 | 4 | 1.3 |
| Example 9 | 300 | 5.5 | 1.5 |
| Example 10* | 300 | 15 | 2.2 |
| Example 11* | 300 | 18 | 2.5 |
| Example 12* | 300 | 20 | 3.0 |
| Example 13 | 1,000 | 0.5 | 1.2 |
| Example 14 | 1,000 | 1 | 1.5 |
| Example 15 | 1,000 | 5 | 2.2 |
| Example 16 | 1,000 | 7 | 2.5 |
| Example 17* | 1,000 | 15 | 3.3 |
| Example 18* | 1,000 | 25 | 4.0 |
| Example 19 | 3,000 | 0.35 | 1.2 |
| Example 20 | 3,000 | 0.7 | 1.5 |
| Example 21 | 3,000 | 3 | 2.5 |
| Example 22 | 3,000 | 5 | 3.3 |
| Example 23* | 3,000 | 10 | 4.0 |
| Example 24* | 3,000 | 20 | 4.7 |

| | | | |
|---|---|---|---|
| *: not according to the invention | | | |

**Table II**

| | Average Concentration of Potassium atm ppm | Heating time (h) | Ratio d₂/d₁ |
|---|---|---|---|
| Comparative Example 1 | 100 | 4 | 1.0 |
| Comparative Example 2 | 100 | 8 | 1.2 |
| Comparative Example 3 | 100 | 13 | 1.5 |
| Comparative Example 4 | 100 | 17 | 1.6 |
| Comparative Example 5 | 100 | 25 | 1.9 |
| Comparative Example 6 | 100 | 30 | 2.0 |
| Comparative Example 7 | 300 | 3 | 1.0 |
| Comparative Example 8 | 300 | 6 | 1.3 |
| Comparative Example 9 | 300 | 12 | 1.5 |
| Comparative Example 10 | 300 | 17 | 2.2 |
| Comparative Example 11 | 300 | 20 | 2.5 |
| Comparative Example 12 | 300 | 25 | 3.0 |
| Comparative Example 13 | 1,000 | 1 | 1.2 |
| Comparative Example 14 | 1,000 | 2 | 1.5 |
| Comparative Example 15 | 1,000 | 5 | 1.8 |
| Comparative Example 16 | 1,000 | 12 | 2.3 |
| Comparative Example 17 | 1,000 | 15 | 2.5 |
| Comparative Example 18 | 1,000 | 18 | 3.0 |
| Comparative Example 19 | 3,000 | 0.5 | 1.2 |
| Comparative Example 20 | 3,000 | 2 | 1.7 |
| Comparative Example 21 | 3,000 | 5 | 2.5 |
| Comparative Example 22 | 3,000 | 12 | 3.5 |
| Comparative Example 23 | 3,000 | 15 | 3.9 |
| Comparative Example 24 | 3,000 | 20 | 4.2 |

Figure 5, Table I, and Table II indicate that the crystallization occurs in a shorter heating time when the potassium concentration is higher in the case where the ratio (d₂/d₁) of the diameter d₂ of the second core region 22 to the diameter d₁ of the first core region 21 is equal. It is also known that the larger the ratio (d₂/d₁), the less the crystallization occurs even if the heating time is long.

Figure 6 is a graph showing the relationship between the attenuation of an optical fiber and the ratio (d₂/d₁) of the diameter d₁ of the first core region to the diameter d₂ of the second core region. Table III summarizes the respective relations between the attenuation of optical fibers and the ratio (d₂/d₁), wherein d₂ is the diameter of the second core region 22 and d₁ is the diameter of the first core region 21, in the Examples shown in Fig. 6. Note that the attenuation values of the optical fibers are those in the case of 1,550 nm wavelength.

**Table III**

| | Average Concentration of Potassium (atm ppm) | Ratio d₂/d₁ | Attenuation (dB/km) |
|---|---|---|---|
| Example 31 | 100 | 1.0 | 0.168 |
| Example 32 | 100 | 1.2 | 0.168 |
| Example 33 | 100 | 1.5 | 0.170 |
| Example 34 | 100 | 1.6 | 0.172 |
| Example 35 | 100 | 1.9 | 0.173 |
| Example 36 | 100 | 2.0 | 0.177 |
| Example 37 | 300 | 1.0 | 0.165 |
| Example 38 | 300 | 1.3 | 0.167 |
| Example 39 | 300 | 1.5 | 0.167 |
| Example 40 | 300 | 2.2 | 0.169 |
| Example 41 | 300 | 2.5 | 0.173 |
| Example 42 | 300 | 3.0 | 0.180 |
| Example 43 | 1,000 | 1.2 | 0.161 |
| Example 44 | 1,000 | 1.5 | 0.162 |
| Example 45 | 1,000 | 1.8 | 0.166 |
| Example 46 | 1,000 | 2.3 | 0.170 |
| Example 47 | 1,000 | 2.5 | 0.173 |
| Example 48 | 1,000 | 3.0 | 0.178 |
| Example 49 | 3,000 | 1.2 | 0.150 |
| Example 50 | 3,000 | 1.5 | 0.152 |
| Example 51 | 3,000 | 2.5 | 0.154 |
| Example 52 | 3,000 | 3.3 | 0.160 |
| Example 53 | 3,000 | 4.0 | 0.165 |
| Example 54 | 3,000 | 4.7 | 0.168 |

As can be seen from Figure 6 and Table III, in the case where the average potassium concentration of the first core region 21 is 100 atomic ppm at the time of fabricating the first core region 21, the attenuation is less than 0.180 dB/km when the ratio (d₂/d₁) is 2.5 or less.

Even if the ratio (d₂/d₁) is large, the higher the potassium concentration of the first core region 21, the less degraded the attenuation is. However, even if the average potassium concentration of the first core region 21 is 1,000 atomic ppm, the attenuation becomes as high as nearly 0.180 dB/km when the ratio (d₂/d₁) is larger than 3.5. This is because the attenuation became worse as the occupying ratio of the second core region 22 (the portion having a low Cl concentration) became higher with respect to the core region 20 as a result of increase in the ratio (d₂/d₁).

On the other hand, in the case where the ratio (d₂/d₁) is 2.5 or less, it is possible to make the attenuation below 0.180 dB/km, which is an average attenuation of a pure silica core fiber that is not doped with potassium, even if the average potassium concentration at the time of fabricating the first core region 21 is as low as 100 atomic ppm. Also, even when the ratio (d₂/d₁) is 2.5 and the average potassium concentration is as high as 1000 atomic ppm at the time of fabricating the first core-region 21, the crystallization can be restrained by making the heating time to be not longer than 7 hours at a temperature of 1,200°C or higher. Furthermore, even if the average potassium concentration at the time of fabricating the first core region 21 is as high as 3,000 atomic ppm, the crystallization can be restrained by reducing the heating time at 1,200°C or higher to 3 hours or less, and with the ratio (d₂/d₁)=2.5, the attenuation of 1,550 nm wavelength can be decreased to 0.154 dB/km.

Therefore, the step of adding a cladding region is carried out by limiting the heating time at a temperature of 1,200°C or higher to 7 hours or less using the rod-in-collapse method, that is, a core rod is inserted into a pipe for cladding and is subsequently integrated with the pipe (collapsing). For forming a cladding region with the rod-in-collapse method, the rod-in-collapse processing may be performed by separating into two or more steps, provided that the heating time should be not more than 7 hours in total.

By manufacturing an optical fiber preform 10 in the above-mentioned manner, it is possible to isolate an alkali metal and a Cl element from each other in the optical fiber preform 10 and suppress formation of an alkali metal chloride. Thus, when an optical fiber is made by drawing the optical fiber preform, it is possible to suppress occurrences of fiber breakage and fluctuation in the diameter of the optical fiber. Furthermore, it is possible to avoid local degradation of attenuation of the optical fiber, and consequently optical fibers having low attenuation can be manufactured with high yield.

It can be seen that by shortening the heating time at temperatures of 1200°C or higher to one hour, the ratio (d₂/d₁) can be lowered to 1.5 and the attenuation can be reduced to 0.162 dB/km. Furthermore, it can be seen that by shortening the time of heating at a temperature of 1,200°C or higher to half an hour or less, the ratio (d₂/d₁) can be lowered to 1.2, and the attenuation can be reduced to 0.161 dB/km. Therefore, the ratio (d₂/d₁) of the diameter d₂ of the second core region 22 to the diameter d₁ of the first core region 21 is preferably 1.2-2.5, and the heating time at temperatures of 1,200°C or more is preferably 7 hours or less, more preferably 1 hour or less, and still more preferably half an hour or less.

Moreover, in the above-mentioned case, the ratio of cross-sectional area of the first core region 21 to the whole core region 20 was 1:20, and the average potassium concentration of the whole core region 20 in the optical fiber preform was 1/20 of the potassium concentration of the first core region 21. That is, the average potassium concentration of the whole core region 20 was about 5 atomic ppm when the average potassium concentration of the first core region 21 was 100 atomic ppm at the time of production.

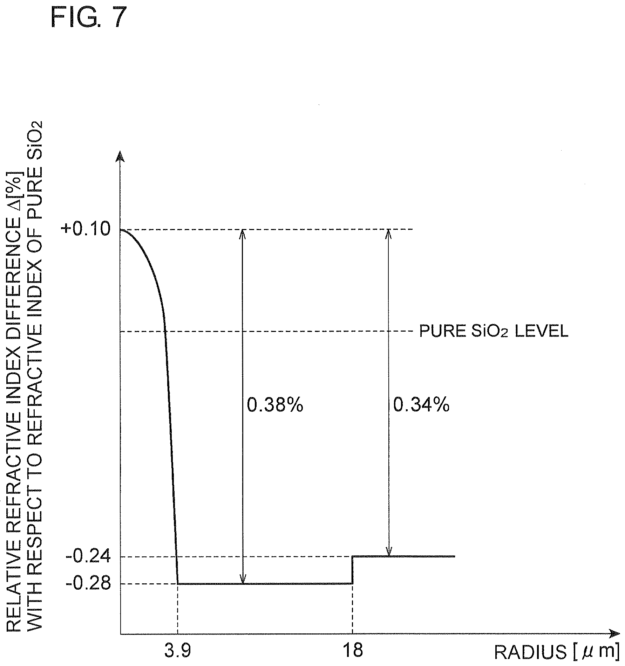

Figure 7 is a conceptional schematic diagram showing the refractive index profile of the optical fibers fabricated by drawing optical fiber preforms prepared by the above-described manufacturing method. The optical characteristics of the optical fibers were as shown in Table IV.

**Table IV**

| | | |
|---|---|---|
| Chromatic dispersion @1,550 nm | ps/nm/km | 15.5-16.2 |
| Dispersion slope @1,550 nm | ps/nm²/km | 0.052-0.054 |
| Zero dispersion wavelength d₀ | nm | 1,307-1,315 |
| Dispersion slope @ d₀ | ps/nm²/km | 0.080-0.083 |
| A_{eff} @1,550 nm | µm² | 78-84 |
| MFD @1,550 nm | µm | 9.9-10.6 |
| MFD @1,310 nm | µm | 8.8-9.5 |
| Fiber cut-off wavelength (2 m fiber) | µm | 1,280-1,340 |
| Cable cut-off wavelength (22 m fiber) | nm | 1,190-1,250 |
| PMD in C and L bands | ps/√km | 0.04-0.12 |
| Non-linear coefficient random dispersion state, @1,550 nm, | (W km)⁻¹ | 0.9-1.1 |

As shown in the above, optical fibers with low attenuation were obtained.

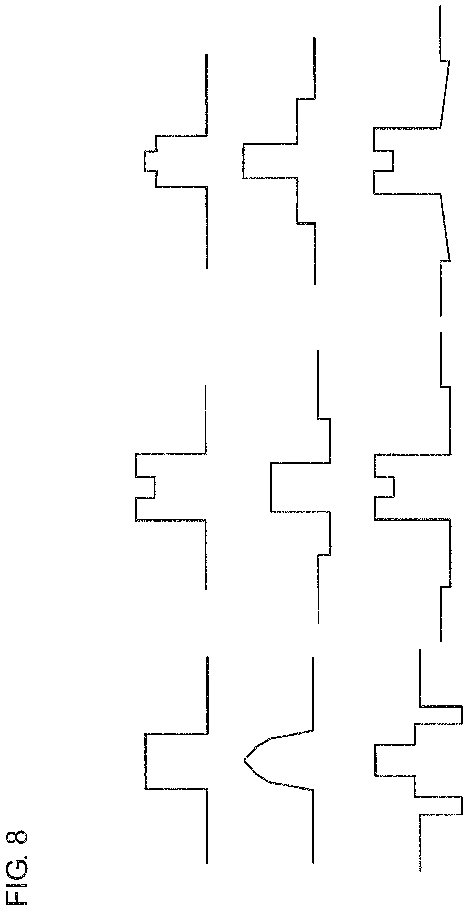

The diameter of the core region 20 may be 6-20 µm, and the relative refractive index difference between the core region 20 and the cladding region 30 may be 0.2-0.5 %. The attenuation will be less in the case of a silica-based glass as follows: fluorine is added to the cladding region 30, the average refractive index of the cladding region 30 is lower than that of the core region 20, and halogen (Cl and F) and alkali metal are added to the core region 20, such that the concentration of halogen is the highest of concentrations of doped elements. The core region 20 and the cladding region 30 may, for example, have a refractive-index profile, such profiles as shown in Fig. 8, but not limited to them. The higher the potassium concentration, the more increase in the loss due to radiation irradiation occurs, and the maximum of potassium concentration is most preferably 500 atomic ppm.

## Claims

1. A method of manufacturing an optical fiber preform (10) having
(a) a core region (20) having
- a first core region (21) which includes a central axis, has a Cl concentration of < 600 atm-ppm and has an alkali metal selectively added thereto,
- a second core region (22) provided around the first core region (21) and having a Cl concentration of < 600 atm-ppm, and
- a third core region (23) provided around the second core region (22) and having a Cl concentration of ≥ 3,000 atm-ppm
(b) a cladding region (30) formed around the core region and having a refractive index lower than that of the core region (20);
the method comprises the steps of:
(i) preparing a core rod having a first core region (21), a second core region (22) and a third core region (23) as defined above; and
(ii) adding a cladding region around the core rod by inserting the core rod into a silica glass pipe and integrating the core rod and the silica glass pipe by heating at a temperature of ≥ 1,200°C for ≤ 7 hours.

2. The method of claim 1, wherein the ratio (d₂/d₁) of the diameter d₂ of the second core region (22) to the diameter d₁ of the first core region (21) is 1.2-2.5, and preferably 1.5-2.5.

3. The method of claim 1 or 2, wherein the heating time at temperatures of ≥ 1,200°C in step (ii) is ≤ 1 hour.

## Patentansprüche

1. Verfahren zur Herstellung einer Vorform einer optischen Faser (10), aufweisend:
(a) einen Kernbereich (20), welcher aufweist:
- einen ersten Kernbereich (21), welcher eine Zentralachse enthält, eine Cl-Konzentration <600 atm-ppm und ein selektiv hinzugefügtes Alkali-Metall aufweist,
- einen zweiten Kernbereich (22) bereitgestellt um den ersten Kernbereich (21) und, der eine Cl-Konzentration von <600 atm-ppm aufweist, und
- einen dritten Kernbereich (23) bereitgestellt um den zweiten Kernbereich (22) und, der eine Cl-Konzentration von ≥3.000 atm-ppm aufweist
(b) einen Mantelbereich (30) um den Kernbereich geformt, welcher einen Brechungsindex kleiner dem des Kernbereiches (20) aufweist;
das Verfahren umfasst die folgenden Schritte:
(i) Herstellen eines Kernstabes, welcher einen ersten Kernbereich (21), einen zweiten Kernbereich (22) und einen dritten Kernbereich (23), wie oben definiert, aufweist; und
(ii) Hinzufügen eines Mantelbereiches um den Kernstab herum durch Einschieben des Kernstabs in eine Quarzglasröhre und Einfügen des Kernstabes in die Quarzglasröhre durch Erhitzen bei einer Temperatur von ≥1.200°C für ≤7 Stunden.

2. Verfahren nach Anspruch 1, wobei das Verhältnis (d₂/d₁) des Durchmessers d₂ des zweiten Kernbereichs (22) zum Durchmesser d₁ des ersten Kernbereichs (21) 1,2-2,5, und vorzugsweise 1,5-2,5, beträgt.

3. Verfahren nach Anspruch 1 oder 2, wobei die Erhitzungszeit bei Temperaturen von ≥1.200°C in Schritt (ii) ≤1 Stunde beträgt.

## Revendications

1. Procédé de fabrication d'une préforme de fibre optique (10) ayant
(a) une région de coeur (20) ayant
- une première région de coeur (21) qui comporte un axe central, a une concentration en CI < 600 atm/ppm et a un métal alcalin ajouté sélectivement à celle-ci,
- une deuxième région de coeur (22) fournie autour de la première région de coeur (21) et ayant une concentration en CI < 600 atm-ppm, et
- une troisième région de coeur (23) fournie autour de la deuxième région de coeur (22) et ayant une concentration en CI ≥ 3 000 atm-ppm
(b) une région de gaine (30) formée autour de la région de coeur et ayant un indice de réfraction inférieur à celui de la région de coeur (20) ;
le procédé comprend les étapes de :
(i) préparation d'une tige de coeur ayant une première région de coeur (21), une deuxième région de coeur (22) et une troisième région de coeur (23) comme défini plus haut; et
(ii) ajout d'une région de revêtement autour de la tige de coeur en insérant la tige de coeur dans un tube de verre de silice, et intégration de la tige de coeur et du tube de verre de silice par chauffage à une température ≥ 1 200 °C pendant ≤ 7 heures.

2. Procédé selon la revendication 1, dans lequel le rapport (d_{2/}d₁) entre le diamètre d₂ de la deuxième région de coeur (22) et le diamètre d₁ de la première région de coeur (21) est de 1,2 à 2,5, et de préférence de 1,5 à 2,5.

3. Procédé selon la revendication 1 ou 2, dans lequel le temps de chauffage à des températures ≥ 1 200 °C dans l'étape (ii) est ≤ 1 heure.
